# EUROPEAN PATENT APPLICATION

(11) **EP 4 140 785 A1**
(43) Date of publication of application: **01.03.2023**
(21) Application number: 22192993.8
(22) Date of filing: 30.08.2022
(51) Int. Cl.: B60C 25/14, B60C 25/05

(54) **INFLATING STATION FOR TYRES**

(30) Priority: 30.08.2021 IT 202100022520
(71) Applicant: MO.S.A.I.C. - Motion System and Information Control S.r.l., 03039 Sora (Fr) (IT)
(72) Inventor: IAFRATE, Daniele, 03039 Sora (IT); D'AGOSTINO, Massimiliano, 00171 Roma (IT)
(74) Representative: Pasquino, Fabio

(57) **Abstract**

The present invention relates to an inflating station (1) for tyres (100) comprising an inflating device (21) which comprises a supporting framework (121) and a plurality of inflating bells (131, 132, 133, 134, 135, 136) coupled to the supporting framework (121), wherein each of the inflating bells (131, 132, 133, 134, 135, 136) has a different size respectively suitable for coupling with tyres of different sizes (100), wherein the supporting framework (121) is able to handle the inflating bells (131, 132, 133, 134, 135, 136) to arrange one of the inflating bells (131, 132, 133, 134, 135, 136) at the inflating position according to the size of the tyre (100) to be inflated and comprises an inflating tool provided with a plurality of coupling seats and a handling shaft (122) able to rotate the inflating tool, wherein the coupling seats are arranged on the inflating tool circumferentially to the handling shaft, wherein each of the coupling seats is able to be coupled to one of the inflating bells (131, 132, 133, 134, 135, 136), wherein the moving means comprises a press (31) comprising a fixed structure (32) and a movable plate (33), wherein the movable plate (33) defines the inflating position and is movable between a rest position, wherein the tyre (100) is spaced form the inflating bell (131, 132, 133, 134, 135, 136), and a working position, wherein the tyre (100) is in contact with the inflating bell (131, 132, 133, 134, 135, 136), and wherein the movable plate (33) comprises a disk (133) made of plastic material and able to define a sealing coupling between the rim and the lower shoulder of the tyre (100) when the movable plate (33) is arranged at the working position.

## Description

### Field of the invention

The present invention relates to an inflating station for tyres and to a relative tyres assembly plant on rims.

In particular, the present invention relates to an inflating station for tyres on relative rims, able to define the inflating with variable joining.

### Background art

The mounting of tyres on rims is one of the activities that in the industrial field of automotive components, or motor vehicles in general, is better suited to being served by automation.

A tyres assembly plant on rims comprises a plurality of stations, often independent to each other and suitable for carrying out specific tasks for obtaining the aforementioned mounting.

The automation of the stations is essential to manage adequate productivity while maintaining the required quality levels. Similarly, the weight of the components involved, as well as of the final product, requires the use of adequate automation.

A tyres assembly plant on rims of the known type comprises a plurality of stations, including a rim transport line, a corresponding pneumatic transport line and an assembly station to define the mutual coupling of the aforementioned components. The inflating station is arranged downstream of the aforementioned assembly station and therefore allows the tyre to be inflated automatically. Inflating is performed by means of a bell which, by pressing the edge, or the bead, of the tyre defines a circular opening between the tyre and the rim the latter being held at a fixed position. The bell defines a substantially hermetic closure of the circular opening that allows it to be managed under pressure. Inflating is, in fact, carried out by means of a flow of pressurized air which is conveyed by the bell towards the aforementioned circular opening. Once the desired pressure has been reached, the bead of the tyre is returned towards the edge of the rim, until it makes contact, keeping the tyre inflated.

All operations are carried out automatically but the size of the tyre, or the rim, to be mounted requires the use of bells with different sizes to ensure the tight fit of the circular opening at the bead of the tyre itself.

In this regard, the inflating station can be provided with a plurality of inflating bells, in which each inflating bell is intended for use for a size or range of sizes of tyres and rims. The plurality of inflating bells allows the same inflating to be carried out on a multiplicity of dimensions by arranging tyres and rims at the right inflating bell to the detriment of the overall dimensions and costs necessary to install and operate on multiple inflating bells.

Alternatively, it is possible to provide a single inflating bell in which the management of the different dimensions of tyres and rims is solved by means of a tool change, that is the portion of the bell adapted to interface tightly with the tyre bead. This solution, while having reduced costs compared to the multiple installation of inflating bells, has high set-up and tool change costs to adapt the bell to the desired dimensions. In particular, the costs involve both the direct costs, for example the need to employ operators for the tool change, and the indirect costs, for example the machine downtime necessary for the tool change wherein no inflating activity is performed.

German Patent Application No. DE102019109497A1 describes a tyre inflating station, suitable for a wide range of different tyre sizes, provided with a lifting table, movable towards an upper part of the inflating bell for a tyre to be inflated, and a rotating carousel device with a horizontal rotation axis with a plurality of inflating rings which can be fixed circumferentially to it, each of which can be moved to an inflating position between the tyres and the upper part of the inflating bell. This inflating station does not allow correct centering of the tyres, the centering being solely due to the conformation of the inflating rings. Furthermore, the movement of the tyre towards the upper part of the bell by means of the lifting table considerably increases the handled weights during the inflating operations.

German Patent Application No. DE102013104007A1 describes a tyre inflating device comprising a tyre inflating bell, consisting of a separate and assembled inflating plate and inflating ring, and a storage of inflating rings, such a storage of inflating rings consisting of a supporting framework and guides lying on several parallel planes each of which can house an inflating ring in a movable way. The storage's supporting framework and the inflating plate can be moved towards each other, wherein an inflating ring, which is located in the storage's guide arranged in the transfer position, can be conveyed by a transport device into an inflating plate guide and centrally on the inflating plate. Therefore, this device requires tool change operations to inflate tyres of different sizes.

U.S. Patent Application No. US7506671B2 discloses a tyre inflating apparatus comprising a tyre inflating plate and a plurality of different sized tyre inflating rings. Based on the diameter of the wheel-tyre combination to be inflated with air, one of the appropriately sized inflating rings is selected and positioned coaxially along the axis of the wheel between the tyre and the inflating plate. The inflating plate moves towards the tyre, contacts the inflating ring tightly, and presses the inflating ring against the upward facing sidewall of the tyre, until an inflating gap is formed between the bead of the sidewall of the tyre and the rim of the wheel. The pressurized air is introduced through the inflating plate, the inflating ring and the inflating gap inside the tyre, until the gap is closed by the increasing air pressure in the tyre. The aforementioned apparatus therefore determines a high handling weight during the inflating operations, where the inflating ring must be moved in the direction of the tyre and pressed onto it.

It would therefore be desirable to have an inflating station for tyres capable of minimizing the drawbacks described above. In this regard, it would be desirable to have an inflating station for tyres capable of being used for the above operations on a plurality of tyres, while maintaining reduced installation and operation costs, as well as reducing the handling weights.

### Summary of the invention

The object of the present invention is to provide an inflating station for tyres able to minimize the aforementioned drawbacks.

In this regard, the object of the present invention is to provide an inflating station for tyres and a relative tyres assembly plant on rims able to able to ensure high productivity with reduced production costs and complexity of operation. In particular, the object of the present invention is to provide an inflating station for tyres and a related tyres assembly plant on rims capable of guaranteeing a reduced cost of downtime for inflating tyres of different sizes.

The aforementioned objects are achieved by an inflating station for tyres, in accordance with the attached claims.

The inflating station for tyres comprises a feeding device of the tyres, an inflating device of the tyres and moving means suitable to define a relative movement between the tyre and the inflating device,
wherein the feeding device is able to arrange the tyre provided with a rim and to be inflated at an inflating position,
wherein the moving means are able to arrange the inflating device and the bead of the tyre in contact to each other to define an inflating opening along the bead, and
wherein the inflating device is able to introduce pressurized air at the bead of the tyre,
wherein the inflating device comprises a supporting framework and a plurality of inflating bells coupled to the supporting framework,
wherein each of the inflating bells has a different size respectively suitable for coupling with tyres of different sizes, and
wherein the supporting framework is able to handle the inflating bells to arrange one of the inflating bells at the inflating position according to the size of the tyre to be inflated,
the inflating station for tyres is characterized in that the supporting framework comprises an inflating tool provided with a plurality of coupling seats and a handling shaft able to rotate the inflating tool,
wherein the coupling seats are arranged on the inflating tool circumferentially to the handling shaft,
wherein each of the coupling seats is able to be coupled to one of the inflating bells,
wherein the moving means comprises a press comprising a fixed structure and a movable plate,
wherein the movable plate defines the inflating position,
wherein the movable plate is movable between a rest position, wherein the tyre is spaced form the inflating bell, and a working position, wherein the tyre is in contact with the inflating bell, and
wherein the movable plate comprises a disk made of plastic material and able to define a sealing coupling between the rim and the lower shoulder of the tyre when the movable plate is arranged at the working position.

The circumferential arrangement of the inflating bells allows both to have a plurality of different tools for inflating and to reduce the overall dimensions of the inflating station for tyres. In this way, it is possible to inflate a plurality of tyres with different dimensions without carrying out long operations of tool change, or of changes in the inflating bell, on the inflating station. The movable plate therefore allows the tyre to be moved towards the inflating bell, reducing the weights being handled during the inflating operations.

In this way, the tightness of the tyre during the inflating operations is ensured.

According to an embodiment, the press comprises a centering cone,
wherein the movable plate is provided with a central hole where the centering cone is arranged, and
wherein the centering cone is movable with respect to the movable plate to lock the rim.

The possibility of moving the centering cone makes it possible the easier displacements of the tyre when this is arranged within the level of the movable plate and, on the contrary, to lock the tyre in position when the centering cone protrudes from the same movable plate.

According to an embodiment, the feeding device comprises a shuttle provided with a loading portion of the tyres to be inflated and an unloading portion of the inflated tyres,
wherein the shuttle is able to be moved to alternately arrange the loading portion and the unloading portion at the inflating station.

In this way, the shuttle allows the simultaneous management of both the loading and unloading of the tyres.

According to an embodiment, the shuttle is interposed between the press and the inflating device.

This arrangement allows to reduce the overall dimensions of the inflating station for tyres while maintaining a high inflating productivity.

According an embodiment, the handling shaft is operatively coupled to a perforated disc provided with a pneumatic shutter to define the correct positioning of one of the inflating bells at the inflating position.

In this way, it is possible to correctly arrange the selected inflating bell at the inflating position.

According to an embodiment, each of the inflating bells is coupled to the handling shaft by a column provided with an air supply duct, and
wherein the inflating tool is provided with a quick-fit coupling able to alternatively pneumatically couple the air supply duct of one of the inflating bells with a compressed air tank.

The air supply ducts and the quick-fit coupling connected to these allow the compressed air to be fed only to the inflating bell placed in the correct inflating position.

The aforementioned objects are achieved by a tyres assembly plant on rims, according to the attached claims.

The tyres assembly plant on rims is characterized in that it comprises an inflating station for tyres according to one of the attached claims.

### Description of the figures

These and further features and advantages of the present invention will become apparent from the disclosure of the preferred embodiment, illustrated by way of a non-limiting example in the accompanying figures, wherein:
- Figure 1 is a front perspective view of the inflating station for tyres according to the preferred embodiment, in accordance with the present invention;
- Figure 2 is a rear perspective view of the inflating station for tyres of Figure 1;
- Figure 3 is a front perspective view of the inflating device of the inflating station for tyres of Figure 1;
- Figure 4 is a front perspective view of the shuttle of the inflating station of Figure 1;
- Figure 5 is a front perspective view of the press of the inflating station of Figure 1;
- Figure 6 is a front perspective view of the supporting framework of the inflating station of Figure 1.

### Detailed description of the invention

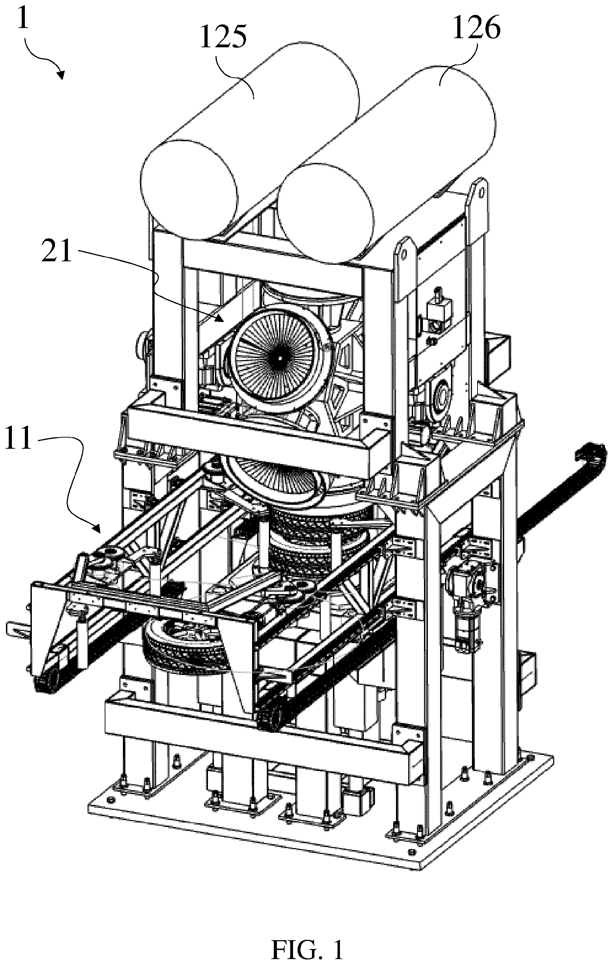

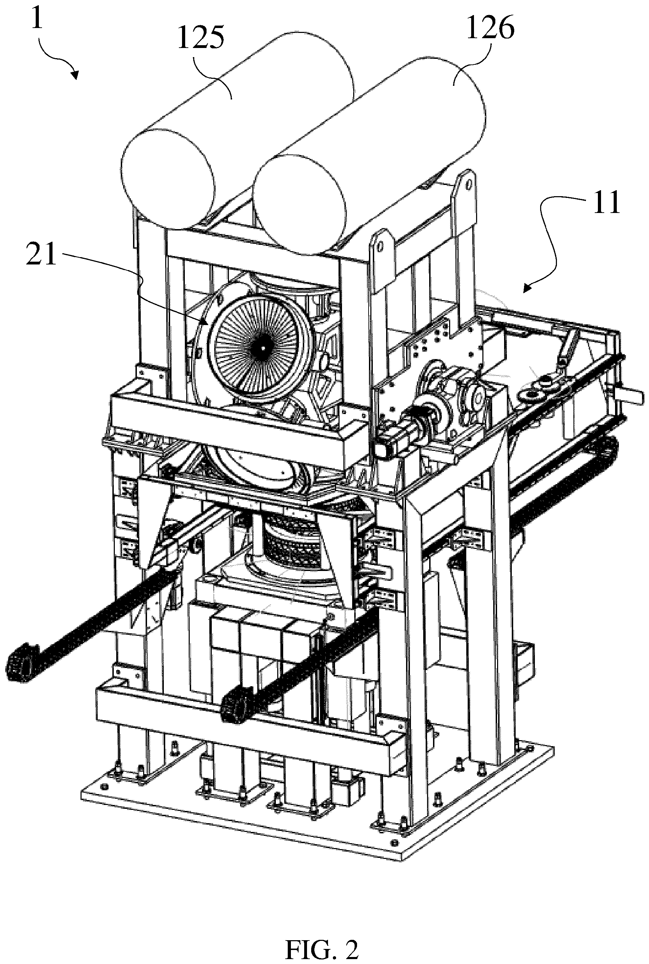

Figures 1-6 illustrate a preferred embodiment of the inflating station 1 for tyres, hereinafter described in greater detail also with reference to a tyres assembly plant on rims.

The inflating station 1 for tyres comprises a feeding device 11 of the tyres, an inflating device 21 of the tyres and moving means adapted to define a relative movement between the tyre and the inflating device 21.

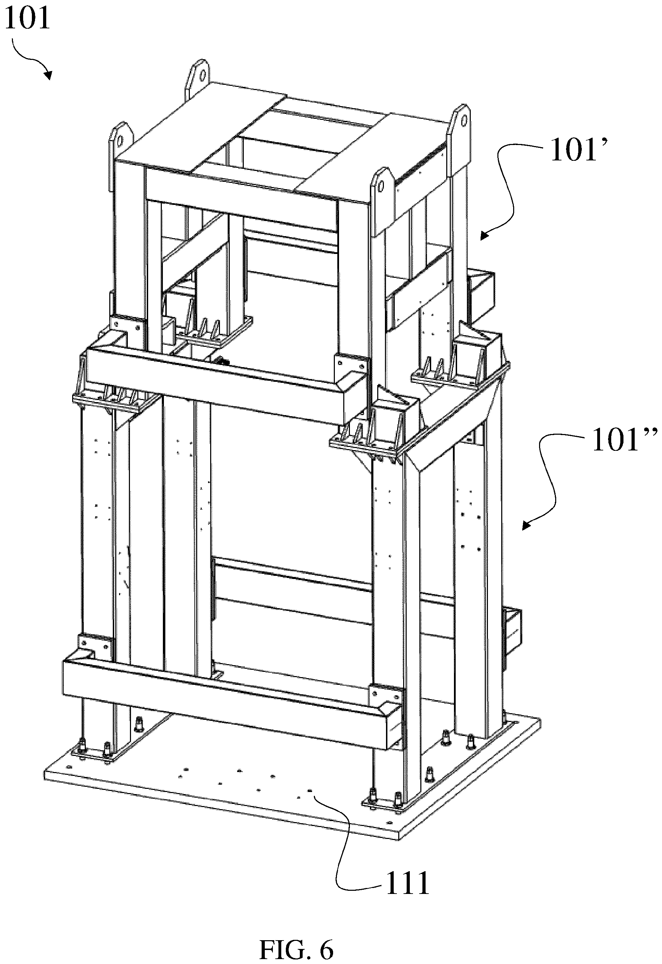

The aforesaid components are preferably arranged within a supporting framework 101 illustrated in Figure 6. In particular, the supporting framework 101 realizes a closed system from the point of view of the stresses, putting on the ground only the weight force of the inflating station 1 itself.

According to the preferred embodiment illustrated therein, the supporting framework 101 is a metal carpentry structure defined by a *"double stool"* geometry, fixed on a bottom plate 111. The supporting framework 101 is divided into two sections, an upper portion 101' and a lower portion 101", screwed together to meet the needs of transport and assembly of the various components. On the supporting framework 101 are provided the supports of the motor parts, the rotation gearmotor and the shuttle translation motor, and the movement parts, upright supports of the movement shaft and sliding guides of the shuttle, as subsequently described in greater detail. The bottom plate 111 and the struts connected to it allow to counteract the stresses induced by the reaction exerted by the tyre on the inflating bell. This force essentially depends on the inflating pressure and the external diameter of the tyre. The supporting framework, therefore, can be designed to withstand a thrust of 50 tons.

It is also possible to arrange the components within a different supporting framework, or connected to a supporting framework defined by the tyres assembly plant on rims.

The feeding device 11 is adapted to arrange the tyre provided with a rim and to be inflated at an inflating position. In particular, in a tyre assembly plant, this feeding device 11 receives the tyre from the upstream line and delivers the inflated tyre-rim assembly to the downstream line.

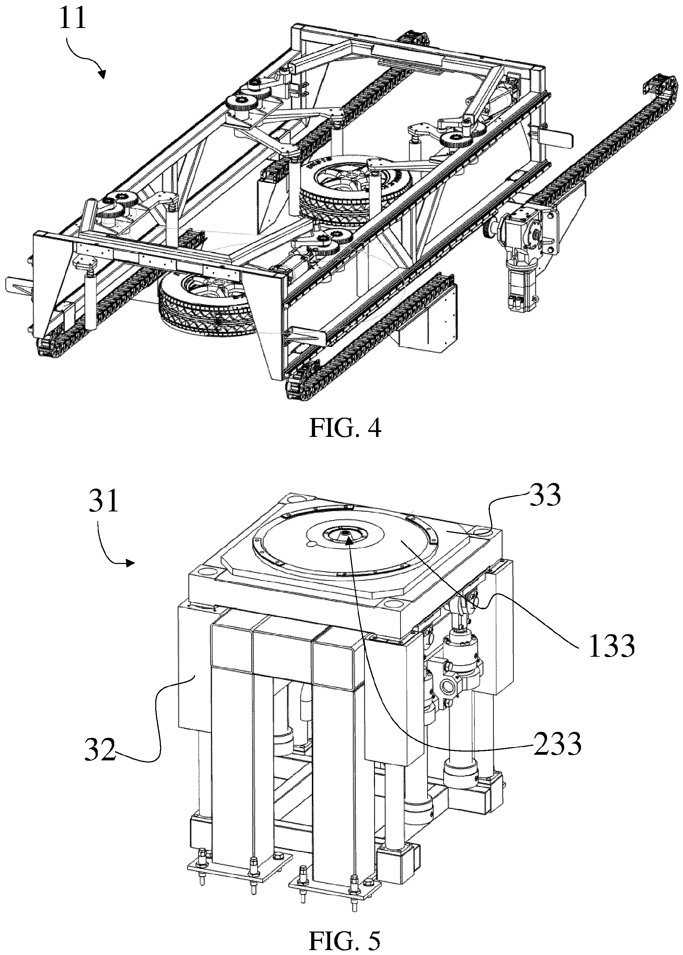

According to a preferred embodiment, the feeding device 11 comprises a shuttle provided with a portion for loading the tyres to be inflated and with an unloading portion for the inflated tyres. This shuttle, illustrated in Figure 4, is adapted to be moved to alternatively arrange the loading portion and the unloading portion at the aforementioned inflating position. Preferably, in fact, the shuttle 11 has a fixed horizontal stroke, which allows at the same time the withdrawal of the tyre to be processed and the one already inflated.

In this way, the shuttle allows the simultaneous management of both the loading and unloading of the tyres.

The shuttle 11 consists of a metal carpentry structure that houses two pneumatically operated gripping equipment for the pneumatic-rim assembly, or the wheel. These assemblies consist of four rollers operated simultaneously with convergent movement towards the center of the wheel. This kinematic mechanism therefore ensures, in addition to a gripping action, also a centering action.

Preferably, the translation of the shuttle 11 takes place on recirculating ball guides while the movement is obtained with a rack-pinion system, where the motorization is of the brushless type and allows a precise and settable definition of the loading and unloading positions.

The moving means are adapted to arrange the inflating device 21 and the tyre bead in contact to define an inflating opening along the bead.

In this regard, preferably the moving means comprise a press 31, illustrated in Figure 5, comprising a fixed structure 32 and a movable plate 33, where the latter defines the aforementioned inflating position. Said press 31 is therefore substantially defined by the movable plate 33, which in the embodiment described therein has a vertical sliding commanded by hydraulic cylinders. This movable plate 33 has the task of bringing the tyre into interference with the inflating device during the air blowing, as described in greater detail below.

The fixed structure 32 is preferably fixed on the bottom plate 111 of the supporting framework 101 and houses the sliding bushings of the guide system of the movable plate 33, the latter comprising cylinders which translate the movable plate 33. A hydraulic circuit controls these cylinders through a single proportional valve and this guarantees the synchronism of the movement of the rods. The feedback on their actual displacement is in charge of a magnetostrictive transducer mounted between the fixed structure 32 and the movable plate 33. The bore of the cylinders and the working pressure of the hydraulic unit allow to generate a thrust force greater than 50 tons. With this value, the movable plate 33 acts as a *"fixed constraint"* during tyre inflating, relegating all geometry variations to the interface between the tyre and the inflating device 21, as described in more detail below.

Preferably, the movable plate 33 comprises a disc 133 made of plastic material suitable for defining a sealed coupling between the rim and the lower shoulder of the tyre when the movable plate is arranged in the working position, as described hereinafter. The disc 133 made of plastic material is therefore housed at the upper face, that is to say the surface that defines the inflating position.

Furthermore, the press 31 preferably comprises a centering cone 233. In particular, the movable plate 33 is provided with a central hole where the aforementioned centering cone 233 is arranged, the latter being mobile with respect to the movable plate 33 to lock the tyre rim. In particular, the centering cone 233 is fixed on the rod of a cylinder connected to the movable plate 33.

Therefore, the disc 133 made of plastic material makes it possible to ensure the seal of the tyre during the inflating operations. At the same time, the possibility of moving the centering cone 233 makes it possible to make easier displacements of the tyre when this is arranged within the level of the movable plate 33 and, on the contrary, to lock the tyre in position when the centering cone 233 comes out of the same movable plate 33.

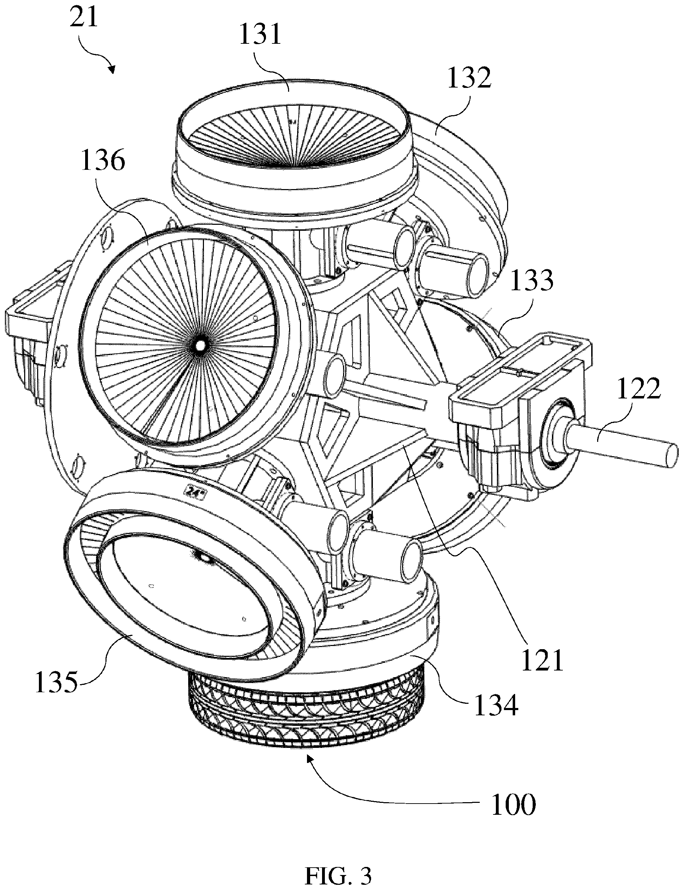

The inflating device 21, further element of the inflating station 1 for tyres, is illustrated in Figure 3 and is suitable for introducing pressurized air, or for blowing air, into the tyre, preferably in correspondence with its bead.

This inflating device 21 comprises a support structure 121 and a plurality of inflating bells 131, 132, 133, 134, 135, 136 coupled to the support structure 121. Each of the aforementioned inflating bells 131, 132, 133, 134, 135, 136 has a different size respectively suitable for coupling with tyres of different sizes. In particular, the reference dimension is defined by the diameter of the inflating bell itself, a diameter which defines the dimension of coupling with the tyre. The support structure 121 is adapted to move the inflating bells 131, 132, 133, 134, 135, 136 to arrange one of the inflating bells at the inflating position according to the size of the tyre to be inflated.

The combination of the plurality of inflating bells 131, 132, 133, 134, 135, 136 and of the support structure 121 suitable for moving them allows to inflate a range of tyres with different dimensions without carrying out extensive operations of tool change, or inflating bell change, on the inflating station 1.

Preferably, the support structure 121 comprises an inflating unit provided with a plurality of coupling seats, in which each of the coupling seats is adapted to be coupled to one of the inflating bells 131, 132, 133, 134, 135, 136. The support structure 121 further comprises a movement shaft 122 suitable for the rotation of the aforementioned inflating assembly and, according to this movement shaft 122, the previously described coupling seats are arranged circumferentially on the inflating assembly.

The circumferential arrangement of the inflating bells 131, 132, 133, 134, 135, 136 allows both to have a plurality of different inflating tools and to reduce the overall dimensions of the inflating station 1 for tyres.

The movement shaft 122 rotates on supports fixed on the upper portion 101' of the supporting framework 101. The motion is impressed by a servo gearmotor connected with an expansion bushing. The rotation of this movement shaft 122 by an appropriate angle brings the preselected inflating bell 131, 132, 133, 134, 135, 136 into the inflating position. In particular, the movement shaft 122 is operatively coupled to a perforated disk provided with a pneumatic shutter to define the correct positioning of one of the inflating bells 131, 132, 133, 134, 135, 136 at the inflating position. In this way, it is possible to correctly arrange the selected inflating bell 131, 132, 133, 134, 135, 136 at the inflating position. In particular, the function of this shutter has a double effect, that is to guarantee the perfect angular positioning of the inflating bell 131, 132, 133, 134, 135, 136 and to generate a signal of the position reached.

The inflating bells 131, 132, 133, 134, 135, 136 and the relative support structure 121 are, therefore, the organs that directly undergo the stresses deriving from the inflating action.

Each inflating bell 131, 132, 133, 134, 135, 136 is connected to the movement shaft 122 by means of a column which has the task of transferring the forces between the two elements and housing the air supply duct. The columns are all the same and can therefore accommodate inflating bells of varying sizes. In addition, the inflating equipment is equipped with a quick-fit suitable for pneumatically coupling the air supply duct of one of the inflating bells 131, 132, 133, 134, 135, 136 with a compressed air tank. In this regard, a pair of tanks 125, 126 is shown on the upper floor of the upper portion 101' of the supporting framework 101, in which one of the two tanks 125, 126 works at the network pressure and the other at the inflating pressure. A proportional valve is inserted at the interface between the two, which regulates, according to request, the service pressure. The supply ducts and the coupling connected to these allow to feed the compressed air only to the inflating bell 131, 132, 133, 134, 135, 136 placed in the correct inflating position.

In consideration of the aforementioned inflating bells 131, 132, 133, 134, 135, 136, the movable plate 33 can be moved from a rest position, in which the tyre is spaced from the inflating bells and therefore is not in contact with any of the aforementioned inflating bells, to a working position, in which the tyre is in contact with the chosen inflating bell. The movable plate 33 therefore allows the tyre to be moved towards the selected inflating bell 131, 132, 133, 134, 135, 136, reducing the weights being moved during the inflating operations. The centering cone 233 comes out of the disc 133 before the inflating step, lifts the rim by inserting itself into the hub hole and centers the rubber with respect to the inflating bell 131, 132, 133, 134, 135, 136.

The tyre transfer plane must necessarily be above the rest plane of the movable plate 33 of the press 31, consequently, if the transport plane of the upstream conveyors is lower, it is necessary to raise the wheel by a suitable height. This functional need can be exploited to achieve a change in the level of transport between the downstream and upstream of the inflating station 1 for tyres.

The inflated pneumatic-rim assembly is brought to the storage area of the output conveyor, while the one to be processed is released on the movable plate 31 of the press 31 by moving it between the two positions of the shuttle 11.

The latter is, in particular, interposed between the press 31 and the inflating device 21. This arrangement makes it possible to reduce the overall dimensions of the inflating station 1 for tyres while at the same time maintaining a high inflating productivity.

The inflating station 1 for tyres can also comprise some accessory elements including pneumatic actuators, pneumatic valves, sensors and hydraulic power unit. The pneumatic actuators consist of the set of cylinders that perform accessory functions such as closing the pneumatic grippers, inserting the shutter, inserting the centering cone 233 and inserting the mobile part of the pneumatic joint. The pneumatic valve group manages the pneumatic actuators mentioned above and the entry of air into the tyre. The sensors detect the various operating phases of the inflating station 1 for tyres and the position of some actuators, including the hydraulic cylinders for actuating the press 31. Finally, the hydraulic power unit is specially designed and built to serve the cylinders of the press 31.

The present invention also relates to a tyres plant assembly on rims, in particular to a plant assembly comprising an inflating station for tyres as described above.

The use of the inflating station 1 for tyres is described below, i.e. a tyres assembly plant on rims equipped with an inflating station for tyres.

The tyre 100 to be inflated enters the pick-up section, coming from the line upstream of the tyres assembly plant on rims.

If the arrival height of the tyre 100 to be inflated is lower than the height of the press plane 31, the tyre is raised to the withdrawal height of the shuttle 11.

A first gripper of the shuttle 11 picks up the tyre 100 to be inflated in the loading portion and, at the same time, a second gripper of the shuttle 11 picks up the inflated tyre 100 in the inflating position. This operation is obviously possible only upon completion of the operations for inflating the tyre 100 arranged at the inflating position.

The shuttle 11 is therefore moved from the loading portion to the unloading portion. In this regard, the shuttle 11 translates horizontally in the free volume between the press 31 and the inflating device 21, moving the tyre 100 to be inflated from the loading portion to the inflating position, in particular on the movable plate 33 and under the selected inflating bell, and, at the same time, moving the inflated tyre 100 from the inflating position to the unloading portion, thus delivering the inflated tyre 100 to the other stations of the tyres assembly plant on rims by opening the second pliers which allow the release of the 100 tyre inflated.

When the tyre 100 to be inflated is placed at the press 31, the relative movable plate 33 is raised to take charge of the tyre 100 itself, the relative position being free. Thus, the first grippers of the shuttle 11 open to release the tyre 100 to be inflated onto the movable plate 33. Once the tyre 100 to be inflated has been delivered, the movable plate 33 of the press 31 moves further from the rest position to the working position. In particular, this movement is carried out by further lifting the movable plate 33 to bring the tyre 100 to be inflated in contrast with the selected inflating bell 131, 132, 133, 134, 135, 136. In this phase, the interference between these two elements is conspicuous in order to create a consistent opening for the passage of air at the bead of the tyre 100 to be inflated.

Therefore, the contrasting inflating bell allows air to be blown with a high flow rate to perform the initial filling of the tyre 100 from the aforementioned opening. The air flow is therefore modulated to reach the desired inflating pressure. At the same time the movable plate 33 is moved to reduce the passage section, arranging a partial opposite movement from the working position to the rest position.

When inflating is done, the movable plate 33 moves completely from the aforementioned working position to the aforementioned rest position, defining the quick-fit of the inflated tyre 100 on the rim in connection with the high speed of movement of the aforementioned movable plate 33.

Finally, when the movable plate 33 is again arranged in the rest position, the shuttle 11 is moved again from the unloading portion to the loading portion, without any actuation of the pliers so as to allow free movement. Once the loading portion has been reached, the shuttle 11 again activates the pliers, so that the second pliers hold the inflated tyre 100 to place it in the unloading portion when a new cycle is carried out, reproducing again the activities described above.

The present invention therefore defines an inflating station for tyres and a relative tyres assembly plant on rims capable of ensuring high productivity with reduced production costs and complexity of use. In particular, the present invention defines an inflating station for tyres and a related tyres assembly plant on rims capable of guaranteeing a reduced cost of downtime for inflating tyres of different sizes.

Thanks to the plurality of inflating bells, the inflating station can quickly adapt to the size of the tyres to be inflated, requiring less space for installation than traditional solutions. In particular, the station according to the present invention allows to inflate tyres of different sizes in a single plant with a very quick switch-type and without the need for the intervention of an operator.

Thanks to its high productivity and flexibility, a single inflating station, or a single assembly plant, is able to be installed instead of a plurality of inflating stations with different sizes for coupling with the tyres to be inflated.

## Claims

1. Inflating station (1) for tyres (100) comprising a feeding device (11) of said tyres (100), an inflating device (21) of said tyres (100) and moving means suitable to define a relative movement between said tyre (100) and said inflating device (21),
wherein said feeding device (11) is able to arrange said tyre (100) provided with a rim and to be inflated at an inflating position,
wherein said moving means are able to arrange said inflating device (21) and the bead of said tyre (100) in contact to each other to define an inflating opening along said bead,
wherein said inflating device (21) is able to introduce pressurized air at said bead of said tyre (100), and
said inflating device (21) comprises a supporting framework (121) and a plurality of inflating bells (131, 132, 133, 134, 135, 136) coupled to said supporting framework (121),
wherein each of said inflating bells (131, 132, 133, 134, 135, 136) has a different size respectively suitable for coupling with tyres of different sizes (100), and
wherein said supporting framework (121) is able to handle said inflating bells (131, 132, 133, 134, 135, 136) to arrange one of said inflating bells (131, 132, 133, 134, 135, 136) at said inflating position according to the size of said tyre (100) to be inflated,
said inflating station (1) for tyres (100) **is characterized in that** said supporting framework (121) comprises an inflating tool provided with a plurality of coupling seats and a handling shaft (122) able to rotate said inflating tool,
wherein said coupling seats are arranged on said inflating tool circumferentially to said handling shaft (122),
wherein each of said coupling seats is able to be coupled to one of said inflating bells (131, 132, 133, 134, 135, 136),
wherein said moving means comprises a press (31) comprising a fixed structure (32) and a movable plate (33),
wherein said movable plate (33) defines said inflating position, and
wherein said movable plate (33) is movable between a rest position, wherein said tyre (100) is spaced form said inflating bell (131, 132, 133, 134, 135, 136), and a working position, wherein said tyre (100) is in contact with said inflating bell (131, 132, 133, 134, 135, 136), and
wherein said movable plate (33) comprises a disk (133) made of plastic material and able to define a sealing coupling between the rim and the lower shoulder of said tyre (100) when said movable plate (33) is arranged at said working position.

2. Inflating station (1) for tyres (100) according to claim 1, wherein said press (31) comprises a centering cone (233),
wherein said movable plate (33) is provided with a central hole where said centering cone (233) is arranged, and
wherein said centering cone (233) is movable with respect to said movable plate (33) to lock said rim.

3. Inflating station (1) for tyres (100) according to claim 1 or 2, wherein said feeding device comprises a shuttle (11) provided with a loading portion of said tyres (100) to be inflated and an unloading portion of said inflated tyres (100), wherein said shuttle (11) is able to be moved to alternately arrange said loading portion and said unloading portion at said inflating station.

4. Inflating station (1) for tyres (100) according to claim 3, wherein said shuttle (11) is interposed between said press (31) and said inflating device (21).

5. Inflating station (1) for tyres (100) according to one of claims 1-4, wherein said handling shaft (122) is operatively coupled to a perforated disc provided with a pneumatic shutter to define the correct positioning of one of said inflating bells (131, 132, 133, 134, 135, 136) at said inflating position.

6. Inflating station (1) for tyres (100) according to one of claims 1-5, wherein each of said inflating bells (131, 132, 133, 134, 135, 136) is coupled to said handling shaft (122) by a column provided with an air supply duct, and wherein said inflating tool is provided with a quick-fit coupling able to alternatively pneumatically couple said air supply duct of one of said inflating bells (131, 132, 133, 134, 135, 136) with a compressed air tank.

7. Tyres assembly plant on rims **characterized in that** it comprises an inflating station (1) for tyres (100) according to one of claims 1-6.
